(19) **Europäisches Patentamt**
**European Patent Office**
**Office européen des brevets**

(11) Veröffentlichungsnummer : **0 045 820**
**B1**

(12) **EUROPÄISCHE PATENTSCHRIFT**

(45) Veröffentlichungstag der Patentschrift :
23.05.84

(51) Int. Cl.³ : **B 29 D 3/02**, B 29 D 23/08,
B 29 C 5/04

(21) Anmeldenummer : 80106554.1

(22) Anmeldetag : 25.10.80

(54) Schleuderverfahren zum Herstellen eines rohrförmigen Körpers und nach dem Verfahren hergestellter rohrförmiger Körper.

(30) Priorität : 07.08.80 DE 3029918

(43) Veröffentlichungstag der Anmeldung :
17.02.82 Patentblatt 82/07

(45) Bekanntmachung des Hinweises auf die Patenterteilung : 23.05.84 Patentblatt 84/21

(84) Benannte Vertragsstaaten :
AT BE CH FR GB LI NL SE

(56) Entgegenhaltungen :
DE-A- 2 000 694
DE-A- 2 018 814
DE-A- 2 163 890
DE-A- 2 349 175
FR-A- 1 347 394
US-A- 4 002 715

(73) Patentinhaber : **G.A. Pfleiderer GmbH & Co KG**
**D-8430 Neumarkt (DE)**

(72) Erfinder : **Trommen, Hartmut**
**Bayernstrasse 15a**
**D-8431 Postbauer -Heng /Opf. (DE)**
Erfinder : **Rother, Bruno**
**Dr.-Eberle-Strasse 38**
**D-8430 Neumarkt (DE)**

(74) Vertreter : **Patentanwälte Czowalla. Matschkur + Partner**
**Königstrasse 1**
**D-8500 Nürnberg 106 (DE)**

## Beschreibung

Die Erfindung richtet sich auf ein Schleuderverfahren zum Herstellen eines rohrförmigen Körpers aus Kunstharz in einer rotierenden Form, wobei der Körper eine Faserarmierung aus einer für das Kunstharz durchlässigen Matte aufweist, die als Rolle in die Form eingebracht wird und sich bei deren Rotation an die Form-Innenwand anlegt.

Solche Körper finden vorzugsweise als Maste für Beleuchtungsanlagen Verwendung. Diese werden z. B. nach den in den DE-A-2 163 890 und 2 018 814 offenbarten und nach dem Grundprinzip vergleichbaren Verfahren hergestellt.

Bei der Vorrichtung nach DE-A-2 018 814 wird ein Ausleger mit Düsen in das Innere der rotierenden Form eingefahren, um das Kunstharz in die Form einzubringen. Die einzelnen Bestandteile des Kunstharzes werden dabei erst innerhalb der Form miteinander in Verbindung gebracht und es soll die Dosierung der einzelnen Gemischanteile des Kunstharzes von außen her verändert werden können. Ein solches Verfahren ist verständlicherweise außerordentlich umständlich und aufwendig. Außerdem liegt bei diesem Herstellungsverfahren die Armierungseinlage fest an der Formaußenwand an und befindet sich auch beim fertiggestellten Rohr in der Außenzone der Rohrwandung. Es läßt sich nicht vermeiden, daß einzelne Fasern der Armierungseinlage an der Oberfläche des Rohrkörpers liegen bzw. diese durchdringen, so daß sich keine glatte und geschlossene Außenfläche des Rohrkörpers ausbilden kann. Dies führt erfahrungsgemäß zu beachtlichen Korrosionserscheinungen. Um diesen Mangel zu beseitigen, werden solche Maste in der Regel nach einem außerordentlich aufwendigen Verfahren nachgearbeitet, um die Oberfläche voll zu verschließen.

Ein ähnliches Verfahrensergebnis ergibt sich nach den in der DE-A-2 163 890 offenbarten Maßnahmen. Dabei wird die Armierungseinlage verdichtet und fest an die Forminnenwand angepreßt. Auf diese Weise befindet sich beim fertiggestellten Rohrkörper die Einlage auch im Außenbereich von dessen Wand. Infolge der beim Schleudervorgang auftretenden Zentrifugalkraft wird die Glasfaserarmierung so weit nach außen bewegt, daß einzelne Fasern durch die Oberfläche des Rohrkörpers dringen. Dadurch wird die Außenfläche des Körpers porös, was wiederum Anlaß zu vorzeitiger Korrosion ist.

Hieraus ergibt sich das dringende Bedürfnis, einen Mast nach dem eingangs bezeichneten an sich bewährten Verfahren herzustellen, der jedoch eine praktisch vollkommen glatte und geschlossene Oberfläche aufweist, so daß durch den Fortfall von Nacharbeit die Herstellungskosten wirksam gesenkt werden und Korrosionen praktisch nicht auftreten können.

Die Erfindung löst dieses Problem in der Weise, daß die Matte auf einem für das Kunstharz durchlässigen formbeständigen äußeren Vlies aufliegt, dessen spezifisches Gewicht etwas geringer ist als das spezifische Gewicht des Kunstharzes und daß das Kunstharz von mindestens einem Ende der Form unter hohem Druck durch eine Düse in die Form eingesprüht wird.

Dadurch erreicht man, daß beim Schleudervorgang die Armierung gewissermaßen auf einer äußeren Kunstharzschicht schwimmt, so daß schließlich der fertige Körper eine praktisch vollkommene homogene Oberfläche aus reinem Kunstharz besitzt und die Armierung mit ihrem außenliegenden Vlies erst nach einer dünnen Kunstharzschicht nach innen hin folgt. Das Vlies verhindert ein Durchdringen einzelner Fasern, so daß die Oberfläche des Körpers vollkommen geschlossen ist. Der nach Erstarren und infolge der natürlichen Schrumpfung leicht in Länsrichtung auszufahrende rohrförmige Körper, beispielsweise ein Mast, hat eine glatte porenfreie Oberfläche. Bei der Herstellung eines rohrförmigen Körpers aus Kunstharz wird die Armierung in einem Zuschnitt von der erforderlichen Größe erstellt, der dann, wenn er in die Form eingebracht ist, eine über die gesamte Wandfläche des herzustellenden Körpers gleichmäßige Verstärkung ergibt. Die Armierung kann aus einer oder mehreren Lagen von Glas- oder Mineralfasern bestehen. Sie kann außerdem in einer den Anforderungen entsprechenden Weise ausgerichtet oder auch an bestimmten besonders beanspruchten Stellen verstärkt sein. Das Einbringen der Armierung und ihr Ablagern an der Forminnenwand bereitet keine Probleme, wenn die Drehrichtung der Form der Wickelrichtung entgegengerichtet ist. Die Matte wickelt sich dann ohne weiteres von dem Tragrohr ab und deckt, bevor das Kunstharz in die rotierende Form eingebracht wird, deren Innenwand ab. Das anschließend in die Form eingesprühte Kunstharz dringt bei der Rotation der Form durch die Armierung, insbesondere auch durch deren formbeständige äußere Vlies hindurch nach außen bis zur Forminnenwand, wozu der hohe Druck der Düse maßgeblich beiträgt. Beim Einspritzen des Kunstharzes läßt sich durch Beobachtung des Forminnern sehr genau erkennen, ob gegebenenfalls bestimmte Zonen noch nicht oder nicht hinreichend beharzt sind. Man kann auf diese Weise eine besonders gleichmäßige Wandstärke erzeugen. Andererseits ist es aber auch möglich, bestimmte Zonen des herzustellenden rohrförmigen Körpers mit einer größeren Wandstärke zu versehen. Es hat sich bei dieser Vorgehensweise als hilfreich erwiesen, den aus der Matte bestehenden Wickel wenigstens an dem beim Einbringen in die Form vorderen Ende mit einem Band zu fixieren, das anschließend wieder gelöst wird.

Wird, wie die Erfindung weiter vorsieht, der Sprühstrahl über mindestens die halbe Länge der Form annähernd horizontal geführt, ergibt sich bereits aus diesem Grund eine weitgehend gleichmäßige Wandstärke des rohrförmigen Körpers.

Die Erfindung befaßt sich darüber hinaus mit dem nach dem Verfahren hergestellten rohrförmigen Körper, wobei die Matte aus vorwiegend in Längsrichtung der Form orientierten Fasern besteht. Dadurch erreicht man eine hohe mechanische Belastbarkeit des rohrförmigen Körpers.

In weiterer Ausgestaltung der Erfindung besteht das Vlies aus Kunststoff-, textilen oder Naturfasern aus Zellstoff, Papier oder dergl. Als besonders vorteilhaft hat es sich erwiesen, ein Gewebe als Vlies zu verwenden, weil dieses die nötige Durchlässigkeit aus seiner Struktur heraus besitzt. Es kann jedoch eine an sich geschlossene Vliesfläche perforiert sein. Die Erfindung bietet außerdem die Möglichkeit, daß der in der erfindungsgemäßen Weise hergestellte Körper Zonen von vergrößerter Schichtdicke der Matte aufweisen kann. In der Praxis hat es sich erwiesen, daß es unter bestimmten Umständen notwendig sein kann, bestimmte Zonen z. B. eines Mastes oder anderer rohrförmiger Körper mit größerer Wandstärke auszubilden als die übrigen Teile.

Weitere Merkmale, Einzelheiten und Vorteile der Erfindung ergeben sich aus der folgenden Beschreibung der bevorzugten Ausführungsform sowie anhand der Zeichnung. Hierbei zeigen, weitgehend schematisiert :

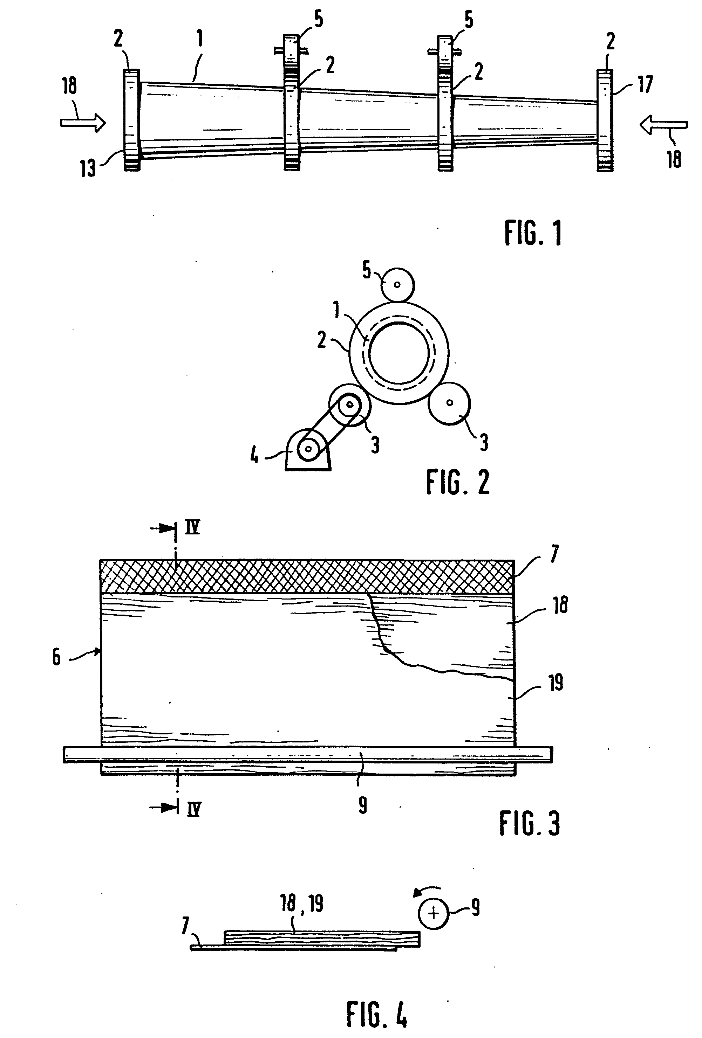

Figur 1 die Seitenansicht einer Schleuderform für das erfindungsgemäße Verfahren ;

Figur 2 die Stirnansicht dieser Schleuderform nach Fig. 1 ;

Figur 3 den abgewickelten Zuschnitt der Armierung mit dem Wickelrohr in Draufsicht und

Figur 4 im Schnitt nach Linie IV-IV in Fig. 3 ;

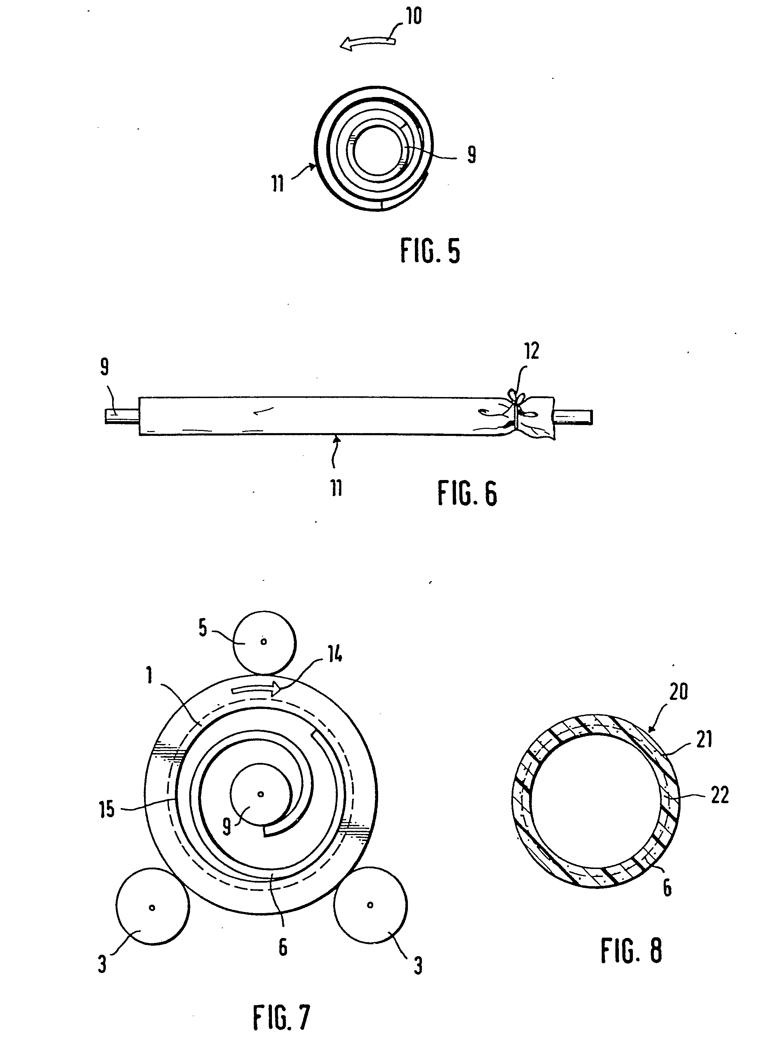

Figur 5 die Stirnansicht der auf das Tragrohr aufgewickelten Armierung ;

Figur 6 eine Seitenansicht des Tragrohrs mit aufgewickelter Armierung ;

Figur 7 den Abwickelvorgang in der Schleuderform und

Figur 8 einen Querschnitt durch den fertiggestellten Rohrkörper.

Die Schleuderform 1 ist an sich bekannt. Sie besteht bei der wiedergegebenen Ausführungsform aus einem konischen Rohr, dessen Innenfläche im allgemeinen geschliffen und verchromt ist. An der Außenfläche sind in Abständen Laufringe 2 angeordnet, die auf Stützrollen 3 aufruhen, von denen eine Reihe mit einem Antrieb 4 verbunden ist. Obere Laufrollen 5 halten die Laufringe 2 unter Anlage auf den unteren Laufrollen 3.

Zur Herstellung des Rohres wird zunächst eine Matte 6 erstellt, die aus einem unteren Vlies 7 und, bei der wiedergegebenen Ausführungsform aus zwei Lagen 18 und 19 von Glasfasern, Kohlefasern oder Mineralfasern besteht, wobei die Faserrichtung vorwiegend in Längsrichtung orientiert ist. Diese Matte 6 wird auf ein Wickelrohr 9 aufgewickelt und zwar in der durch den Pfeil 10 bezeichneten Wickelrichtung. Zumindest das eine Ende dieses Wickels 11 wird mit einem Band oder dergl. Befestigungsmittel 12 fixiert. Darauf wird dieser Wickel 11 mit seinem durch das Band 12 befestigten Ende vom Fuß 13 aus in die Form 1 eingeführt und darauf das Befestigungsmittel 12 entfernt. Wird nun die Form 1 in Pfeilrichtung 14 in Drehung versetzt, wickelt sich die Matte 6 von dem Tragrohr 9 ab und legt sich lose, mit dem Vlies 7 zuerst, an die Innenwand 15 der Form 1 an. Da die Länge x und die Breite y der Matte 6 der Länge und dem Innenumfang der Schleuderform 1 entsprechen sowie der Zuschnitt der Matte auch eine evtl. Konizität der Form 1 berücksichtigt, ist nach dem Abwickeln der Matte 6 die Innenwand 15 der Form 1 bedeckt. Wird nun die Schleuderform in an sich bekannter Weise in Rotation versetzt und das Kunstharz vom Fuß 13 oder Zopf 17 durch eine Düse unter hohem Druck in die Form 1 eingespritzt, was durch die Pfeile 18 angedeutet ist, bestreicht der Strahl des Kunstharzes die Innenseite der Matte 6. Das Kunstharz dringt durch die Faserlagen 18 und 19 hindurch und durchsetzt auch das Vlies 7. Durch das gegenüber dem spezifischen Gewicht des Kunstharzes geringere spezifische Gewicht des Vlieses schwimmt dies gewissermaßen auf einer äußeren Harzschicht, die schließlich beim fertigen Rohrkörper 20 eine äußere Kunstharzschicht 21 bildet, innerhalb deren dann die durch die Matte 6 armierte Schicht 22 folgt. Das Kunstharz bildet aber in der Schicht 21 eine gleichmäßige glatte Oberfläche aus, die nicht von der Armierung durchsetzt ist.

## Ansprüche

1. Schleuderverfahren zum Herstellen eines rohrförmigen Körpers (20) aus Kunstharz in einer rotierenden Form (1), wobei der Körper eine Faserarmierung (18, 19) aus einer für das Kunstharz durchlässigen Matte (6) aufweist, die als Rolle in die Form eingebracht wird und sich bei deren Rotation an die Forminnenwand (15) anlegt, dadurch gekennzeichnet, daß die Matte (6) auf einem für das Kunstharz durchlässigen formbeständigen äußeren Vlies (7) aufliegt, dessen spezifisches Gewicht etwas geringer ist als das spezifische Gewicht des Kunstharzes und daß das Kunstharz von mindestens einem Ende der Form (1) unter hohem Druck durch eine Düse in die Form eingesprüht wird.

2. Verfahren nach Anspruch 1, dadurch gekennzeichnet, daß der Sprühstrahl (18) über mindestens die halbe Länge der Form (1) annähernd horizontal geführt wird.

3. Rohrförmiger Körper (20), vorzugsweise Mast, hergestellt nach dem Verfahren der Ansprüche 1 und/oder 2, dadurch gekennzeichnet, daß die Matte (6) aus vorwiegend in Längsrichtung der Form (1) orientierten Fasern besteht.

4. Rohrförmiger Körper (20) nach Anspruch 3, dadurch gekennzeichnet, daß das Vlies (7) aus Kunststoff, textilen oder Naturfasern, Zellstoff, Papier od. dgl. besteht.

5. Rohrförmiger Körper (20) nach Anspruch 3 oder 4, dadurch gekennzeichnet, daß das Vlies (7) aus einem Gewebe besteht.

6. Rohrförmiger Körper (20) nach einem der Ansprüche 3 bis 5, dadurch gekennzeichnet, daß die Matte (6) Zonen von vergrößerter Schichtdicke aufweist.

7. Rohrförmiger Körper (20) nach einem der Ansprüche 3 bis 6, gekennzeichnet durch Zonen von größerer Wandstärke neben Zonen geringerer Wandstärke.

## Claims

1. A centrifugal process for producing a tubular member (20) of synthetic resin in a rotating mould (1), wherein the member comprises a fibre reinforcement (18, 19) consisting of a mat (6) which is pervious to the synthetic resin, which is introduced into the mould as a roll and which bears against the inner wall (15) of the mould during its rotation, characterised in that the mat (6) rests on an outer fleece (7) of stable shape which is pervious to the synthetic resin and the specific gravity of which is somewhat lower than the specific gravity of the synthetic resin, and that the synthetic resin is sprayed into the mould, under high pressure, through a nozzle, from at least one end of the mould (1).

2. A process as claimed in Claim 1, characterised in that the spray jet (18) is guided substantially horizontally over at least half the length of the mould (1).

3. A tubular member (20), preferably a mast, produced by the method of Claim 1 and/or 2, characterised in that the mat (6) consists of fibres orientated predominantly in the longitudinal direction of the mould (1).

4. A tubular member (20) as claimed in Claim 3, characterised in that the fleece (7) consists of plastics material, textile or natural fibres, cellulose, paper or the like.

5. A tubular member (20) as claimed in Claim 3 or 4, characterised in that the fleece (7) consists of a woven fabric.

6. A tubular member (20) as claimed in one of Claims 3 to 5, characterised in that the mat (6) comprises zones with an increased layer thickness.

7. A tubular member (20) as claimed in one of Claims 3 to 6, characterised by zones having a greater wall thickness adjacent zones having a lesser wall thickness.

## Revendications

1. Procédé de fabrication d'un corps tubulaire en résine synthétique (20), par coulée centrifuge dans un moule rotatif (1), le corps présentant une armature fibreuse (18, 19) constituée par une natte (6) perméable à la résine synthétique, natte qui est introduite dans le moule en forme de rouleau et qui se pose sur la paroi intérieure (15) du moule pendant sa rotation, caractérisé en ce que la natte (6) repose sur un matelas fibreux extérieur (7) stable, perméable aux résines synthétiques dont le poids spécifique est inférieur au poids spécifique de la résine synthétique et en ce que la résine synthétique est injectée dans le moule (1) par au moins une extrémité du moule (1) sous haute pression par une buse.

2. Procédé selon la revendication 1, caractérisé en ce que le jet d'injection (18) est conduit à peu près horizontalement au moins sur la moitié de la longueur du moule (1).

3. Corps tubulaire (20), de préférence poteau, réalisé selon le procédé de la revendication 1 et/ou 2, caractérisé en ce que la natte (6) est principalement constituée par des fibres orientées dans le sens longitudinal du moule (1).

4. Corps tubulaire (20) selon la revendication 3, caractérisé en ce que le matelas de fibre (7) est constitué par des fibres textiles synthétiques ou naturelles, de la cellulose, du papier ou analogue.

5. Corps tubulaire (20) selon les revendications 3 ou 4, caractérisé en ce que le matelas fibreux (7) est constitué par un tissu.

6. Corps tubulaire (20) selon les revendications 3 à 5, caractérisé en ce que la natte (6) présente des zones de couches agrandies.

7. Corps tubulaire (20) selon l'une des revendications 3 à 6, caractérisé par des zones de parois à épaisseur plus grande et par des zones à parois moins épaisses.

0 045 820

FIG. 1

FIG. 2

FIG. 3

FIG. 4

10

**FIG. 5**

9

12

**FIG. 6**

11

5

14

1

20

21

22

15

9

6

3

3

6

**FIG. 8**

**FIG. 7**

2